# EUROPEAN PATENT APPLICATION

(11) **EP 4 205 552 A1**
(43) Date of publication of application: **05.07.2023**
(21) Application number: 21218409.7
(22) Date of filing: 30.12.2021
(51) Int. Cl.: A23J 3/14, A23J 3/22, A23L 29/212, A23L 29/281

(54) **MEAT AND SEAFOOD ANALOGUE PRODUCTS**

(71) Applicant: BK Giulini GmbH, 68526 Ladenburg (DE)
(72) Inventor: Srichuwong, Sathapom, 69115 Heidelberg (DE); Graber, Alexander, 68169 Mannheim (DE); Loew, Martin, 68535 Edingen-Neckarhausen (DE); Sporka, Radovan, 69117 Heidelberg (DE)
(74) Representative: Hoyng Rokh Monegier B.V.

(57) **Abstract**

The present invention relates to a plant-based meat substitute comprising
(i) particles comprising a texturized plant protein material, water and a vegetable lipid and
(ii) a binding agent comprising, relative to the particles and binding agent,
- 0.5% to 20% of a high gel strength protein
- 0.3% to 20% of a cold-thickening polysaccharide

0% to 5% of additional ingredients chosen from chelating agent, emulsifier, natural flavour ingredients and enzymes crosslinking or ionically modifying the high gel strength protein

## Description

### FIELD OF THE INVENTION

This invention relates to meat and seafood analogue products containing a combination of texturized protein particles and a binding agent and to a process for making this analogue product.

### BACKGROUND

Because of environmental and health concerns, people are increasingly trying to limit the amount of meat and other animal-based foods in their diets. Therefore, there is a need for meat imitations comprising exclusively vegetable ingredients. Such meat surrogates should have similar taste, appearance, odor, texture, nutrient profile, response to heating, and mechanical and rheological properties as natural or processed meat products. In order to achieve suitable properties, chemically modified plant based materials, like methyl-cellulose, are often added.

The global clean-label trend among food producers and consumers leads to the desire to have less chemically sounding substances or E-numbers on the ingredient label. Many formulators are therefore seeking solutions that provide the same functionality as formerly used additives, while offering a cleaner label.

A number of purely plant-based meat substitutes have been developed, and can be used to prepare vegan burger patties, meatballs, crab cakes, fish fingers, nuggets, and related products. WO 2020038541, for example, describes new, exclusively plant-based meat imitations. Such plant-based meat substitutes are currently being manufactured for instance from vegetable proteins obtained from nuts, legumes, mushrooms, algae, or various cereals, and oligosaccharides and lipids. Texturized vegetable protein (abbreviated as TVP) that mimic ground meat muscle textures are commercially available, for instance the brand Rovitaris^{®} PX 365, which is a pea-protein-based meat imitation, suitable for the preparation of plant-based burger patty, meatballs, taco meat, and similar products. TVP is commonly produced by low-moisture extrusion.

Apart from the use of low-moisture TVP, it is also possible to produce the mentioned vegan meat alternatives by incorporating plant-based fiber-like structures that are produced under conditions where greater amounts of liquid are present. Such a process might e.g. derive from a protein-alginate precipitation in connection with a source of calcium chloride or from a wet extrusion process. Such plant-based fiber-like structure (also abbreviated as TVP) has off-white color which is suitable for preparation of plant-based chicken nugget product, and plant-based seafoods such as crab cake, fish stick products, and are also denoted as 'wet fibre'.

In order to attain the desired mechanical strength and texture and to maintain the shape of the given meat and seafood substitutes, a binder or binding agent is used. Binding agent is a single edible food substance or a mixture of edible food substances that can hold components of the foodstuff through its thickening, dispersing or gelling property. Binding agents are crucial components for plant-based products resembling ground and bound meat products, like burgers, patties, meat balls, chicken nuggets, fish fingers or crab cakes. TVPs usually form the basis of the mentioned products. As TVP alone, analogue to ground meat, cannot form a coherent product, the use of binders is unavoidable to provide adhesion for the TVP particles. These binding agents can also provide for emulsion stability to prevent the leakage of oil, and for mechanical stability during further processing, transport, or optional storage. Commercial TVP can be made from soy protein, pea protein and wheat gluten. Soy protein and wheat gluten are listed as allergen-containing food ingredients, therefore pea-protein based TVP has increases its popularity and worldwide production as the main source of allergen-free TVP product. However pea-based TVP has far inferior protein quality especially the amount of essential amino acids in comparison to soy protein. Food manufacturers are trying to increase greater amount of essential amino acids of pea-based TVP meat analogue by incorporation of more nutritious food proteins however this approach commonly lead to inferior textural profile of the products. For emulsion type meat analogue such as plant-based sausage, binding agents like methylcellulose, carrageenan and/or modified starches are generally used. For minced meat analogue and related products such as burger patty, meat ball, nugget, crab cake and fish sticks, common binding agents are egg white in powder or liquid form and methylcellulose for vegetarian and animal-free type products, respectively. In these products, the binding agents help to improve the texture and appearance of the product by gluing the minced particles together. The functionality of hydrocolloids such as methylcellulose, hydroxypropyl methylcellulose, long fibre cellulose, corn zein and alginates, to bind TVP for improving oil encapsulation and reducing oil absorption, is well documented.

Other texturizing agents include, for example, the dietary fibres, fibre-rich fractions of cereals, oligosaccharides pectin, agar, konjac gum, tragacanth, carrageenan, alginate (sodium or calcium alginate), xanthan gum, gellan gum, locust bean gum, starch, and guaran. Proteins such as wheat gluten, soy protein, or pea protein isolate, may be added to further improve textural property of the products.

One particularly preferred binder for meat substitutes is methylcellulose, due to its very unique properties. Owing to its high viscosity in cold state when mixed with hydrated TVPs and other ingredients, these mixtures can be easily shaped/molded in the form of patties, meatballs, etc. Methylcellulose, which, unlike most other common thickening agents, becomes more viscous upon heating and thus mimics proteins, which also tend to solidify upon heating due to denaturation. During cooling viscosity is again reduced. Methylcellulose is not, however, a natural substance and is synthesized by chemical modification, namely etherification, of cellulose. Consumers often reject synthetic food additives, and there is therefore a need for more natural, label friendly ingredients that can replace methylcellulose in plant-based meat surrogates as binding agent. Label friendly ingredients are components that do not require an E-number on its label, and such components generally are derived from a natural source with low level or no chemical treatment.

A comprehensive review on plant-based meat substitutes has recently been published (Kyriakopoulou et al., Functionality of Ingredients and Additives in Plant-based Meat Analogues, Foods 2021, 10, 600). The review also states that up to the present point no clear alternative to methylcellulose would exist that provides all necessary functionalities.

### SUMMARY OF THE INVENTION

This invention provides a label-friendly binding system, suitable for the manufacture of plant-based meat substitutes. This invention also provides purely vegetable-based meat surrogates devoid of methylcellulose.

The plant-based meat substitute according to the present invention comprises
(i) particles comprising a texturized plant protein material, water and a vegetable lipid and
(ii) a binding agent comprising, relative to the particles and binding agent,
   - 0.5% to 20% of a high gel strength protein
   - 0.3% to 20% of a cold-thickening polysaccharide
   - 0% to 5% of additional ingredients chosen from chelating agent, emulsifier, natural flavour ingredient and enzymes crosslinking or ionically modifying the high gel strength protein.

The binding system according the invention is able to mimic the unique behavior of methylcellulose during processing of meat substitutes, namely creating necessary viscosity and adhesion of components, like TVP, during the shaping process and gelling upon heating, thereby creating the required succulence and consistency needed to create a meat substitute product that intends to represent texture of conventional meat products.

Furthermore, the new binding system described herein, shows improved properties compared to methylcellulose, namely texture, measured as total hardness, representing sensory impression during mastication, is maintained during cooling down of respective meat substitute products. This property is advantageous when producing preprocessed ready-to-eat variants, for example, ready-to-eat burgers available in the cooling fridge of retail markets. Food manufacturers using the new binding system are able to design consistency parameters, like for example softness of the product, without having to take into consideration viscosity changes during (re)heating by the consumer.

Preferably, the plant-based meat substitute comprises particles (i) comprising 10 wt% to 60 wt% of texturized plant protein material, 10% to 90% of water and 1% to 30% of a vegetable lipid, wherein the wt% are related to the plant-based meat substitute (amounts of (i) and (ii)).

Preferably, the binding agent of the plant-based meat substitute of the invention comprises 0.5 - 8% of a high gel strength protein, more preferably 1-6 wt%.

Preferably, the binding agent of the plant based meat substitute of the invention comprises 0.5 - 6% of a cold-thickening polysaccharide, more preferably 0.5-4 wt%.

Preferably, the high gel strength protein of the plant-based meat substitute according the invention includes protein isolates or concentrates from potato, canola or other protein sources that possess gel hardness values > 30 g at 4 wt% concentration in demineralized water, and in water with 1.5 wt% sodium chloride, and preferably having - as a 2 wt% protein - a solubility in water and in 1.5 wt% NaCl of more than 40%, preferably more than 50%.

Preferably, the cold thickening polysaccharide in the plant-based meat substitute of the invention is pregelatinized starch, oat meal, pectin, vegetable fiber, beta glucan, mixture of soluble and insoluble fiber, or hydrocolloid that possess cold soluble, cold gelling ability and the like. More preferably, pregelatinized starch is used as cold thickening polysaccharide.

Preferably, the additional ingredient is: a chelating agent chosen from one or more of phosphates or citrate; is a natural flavour ingredient chosen from one or more of arginine, lysine, histidine, yeast extract; is a food grade emulsifiers is chosen from one or more of nonionic, cationic, anionic surfactants such as lecithin; is an enzyme, such as a protein crosslinking enzyme such as transglutaminase or glutamine-glutamic acid converting enzyme such as glutaminase.

Preferably, the plant-based meat substitute according to the invention is a substitute for mammal meat, such as from bovine, swine, sheep; poultry meat, such as from chicken, turkey, duck; aquatic animal meat, such as from fish, crustacean. Even more preferably, the meat substitute is a form comprising particles (i) mimicking ground meat and/or meat particles, and a binding agent (ii).

Preferably, the plant-based meat substitute further comprises one or more of flavoring and coloring additives.

The process for making the plant based meat substitute according to present invention comprises the following steps: the components are mixed with water, allowed to hydrate, formed to a shape, heated to a temperature of about 70 °C or higher, and cooled.

Shaping generally is aimed at providing a desired shape, achieved for example by molding, extrusion and the like. Desired shape can be meat-ball shape, burger-shape, fish-finger shape, chicken-nugget shape etc.

When using methylcellulose as binding agent two separated preparation steps are typically required for maximum performance: Hydration and mixing of methylcellulose in water and fat or oil, to create a viscous homogeneous mass (emulsion) (i) and preparation of a mixture of the remaining ingredients including protein (ii), e.g. in the form of TVP, followed by combining the methylcellulose emulsion with the other components. The present invention allows for a single-step preparation, as this binding system, in contrast to methylcellulose, can be mixed together with all other ingredients required for preparation of a meat substitute in dry form and still be sufficiently hydrated when water is added. One major advantage resulting therefrom is reduction of processing effort, namely saving of equipment, time and cost. In addition, ingredient suppliers may now offer combined solutions in one packaging with all dry ingredients that are required for manufacture of vegan meat substitutes.

### SHORT DESCRIPTION OF THE FIGURES

**Figure 1** shows gel hardness values of various proteins from plant and animal origins at a range of concentrations, with and without salt.
**Figure 2** shows exemplary test results of a gel measurement.

### DETAILED DESCRIPTION OF THE INVENTION

The combination is used as a substitute for egg white or methylcellulose and its derivatives, which are commonly required as a binding agent in meat analogues of mammals, poultry or other farm animals, fish, crab or other aquatic animals. The meat analogues often comprise texturized protein particles, such as TVP. Such particles resembling ground meat, crab or fish meat, and the like often need to be bound in a larger structure.

The plant-based meat substitute according to the present invention comprises
(i) particles comprising a texturized plant protein material, water and a vegetable lipid and
(ii) a binding agent comprising, relative to the particles and binding agent,
   - 0.5% to 20% of a high gel strength protein
   - 0.3% to 20% of a cold-thickening polysaccharide

0% to 5% of additional ingredients chosen from chelating agent, emulsifier, natural flavour ingredient and enzymes crosslinking or ionically modifying the high gel strength protein

The term binding agent' or 'binder' as used herein means an agent that mediates binding between single components, e.g. pieces of textured vegetable protein, and stabilizes the formed shapes of meat substitute products, for example, hamburger patty analogues, meat loaf analogues, crab cake analogous, chicken nugget analogues.

### High gel strength proteins

Among 14 protein materials tested, canola protein isolate (cruciferin) and potato protein isolate (patatin) show self-supporting gel at low concentration 4% w/w with or without the presence of 1.5% NaCl. These gels exhibit the gel hardness values of more than 30 g. These values are comparable to egg white protein gel in the presence of 1.5% NaCl. Such self-supporting gel is not observed for many other protein materials tested as currently available. At 8% w/w, increased gel harness values are observed for canola protein isolate, potato protein isolate and egg protein powder. These gels exhibit the gel hardness values of more than 100 g. At the same concentration, whey protein concentrate and soy protein concentrate show gel hardness of 40 g, while other plant proteins tested did not exhibit self-supporting gel characteristics.

To achieve efficient heat induced gelation, it is furthermore preferred that the high gel strength protein is well soluble as 2 wt% protein in water, and in 1.5 wt% NaCl solution (at about pH 7). Therefore, the solubility of protein in water and in 1.5 wt% NaCl in water, the solubility preferably is 40 % or more, more preferably 50% or more. For example, generally available grades of pea protein isolate or soy protein isolate show lower solubility, such as between 10-30%.

This particular gelation property indicate that some plant proteins such as potato and canola protein are high gel strength proteins which can form heat-induced self-supporting gels at low concentration and exhibit measurable gel hardness values after storage.

In this invention, the high gel strength proteins possess gel hardness value of at least 30 g and 100 g at 4% w/w and 8% w/w protein in water or 1.5% NaCl. These proteins exhibit endothermic peak of protein denaturation determined by differential scanning colorimetry (DSC). Such thermal property indicate that these proteins possess native protein structures that are denatured upon heating. A range of denaturation temperature of potato protein isolate is lower than that of canola protein isolate, indicating that higher temperature is needed to induce gel formation for canola protein isolate.

Another known protein that may exhibit suitable gel strength is rubisco (Ribulose-1,5-bisphosphate carboxylase-oxygenase). The protein rubisco is one of the most abundant plant proteins and is involved in the photosynthetic fixation of carbon dioxide. This enzyme can be isolated from various plants, and procedures for its isolation and purification have been disclosed, for instance in WO 2021/007484 and WO 2021/015087. Patent US10863761 discloses the composition of a beef meat replica comprising a heme-containing protein.

Rubisco has beneficial effects in meat replicas such as high solubility and close to optimum essential amino acid composition and ability to interact with lipids. Patent application AU2021240241 discloses composition of an isolated and purified plant protein for application of as a meat substitute that is constructed from a muscle analog, fat analog and connective tissue analog, where rubisco is employed to modulate melting properties and fat retention of a fat analog.

Other high gel strength proteins would be derived from mild extraction of plant proteins, synthetic biology and fermentation technology and soluble proteins extracted from single cells such as microalgae.

In its pure, commercially available form potato protein or canola protein for example, generally are available as colorless, tasteless, and odorless powder. Like methylcellulose the viscosity of the high gel proteins increases upon heating, but, unlike the gelling of methylcellulose, this denaturation is irreversible, what is a further advantage of the binding agents of the present disclosure, when compared to the prior art. Moreover, by adding a protein instead of methylcellulose to the meat imitation, the nutritional value of said meat substitute is enhanced

### Cold thickening polysaccharide

The cold thickening polysaccharide provides cold adhesiveness to protein mass and other ingredients at room temperature before cooking, and can help on shape formation. The polysaccharide component of the binding agent comprises of food-grade polysaccharides that are fully or partially disperse in water, generating a viscous aqueous mixture at room temperature. The polysaccharide may be a mixture of binding agent

In a preferred embodiment of the present invention, the cold thickening polysaccharide is pregelatinized starch. Pregelatinized starch is an instant starch that has been gelatinized and then dried. It subsequently swells in liquid without the application of heat. Pregelatinised starch appears in many foods, including instant pudding mixes. Pregelatinized starches is dispersable in cold water, it can be cooked and dried. It does not return to its original ungelatinized condition. Cold water-swelling (CWS) starch is an instant starch that remains as an intact granule. It offers convenience, stability, clarity, and texture. Cold water-swelling starches maybe gelling or non-gelling. They may be used in cold-process salad dressings, providing the thick, creamy mouth feel in no-fat salad dressings.

Pregelatinized starch is a partially solubilized starch with better room temperature solubility than native starch, and is used as thickening agent for food or as fat substitute or emulsifier. Use of functional native starches is in line with the desire to have a clean label, E-number free ingredient list. During the pre-gelatinization process, hydrogen bonds between individual starch molecules are partially replaced by water-starch hydrogen bonds, what results in a weakening of the bonding between starch molecules. Pregelatinized starch enhances the viscosity of meat surrogate mixtures already at ambient temperature, and thus enables the shaping of such products prior to heating.

Starch can be obtained from many different plants, but for the present invention, pregelatinized pea starch is particularly preferred. Other suitable pregelatinized starches include starch from potato, wheat, spelt, corn, sago, tapioca, rice, barley, rye, triticale, quinoa, amaranth, teff, sweet potato, mung bean, yam, edible canna, arrow root or banana.

Alternatively, instead of a pregelatinized starch, other typical, food-compatible, plant-based thickening agents may also be used to improve cold adhesiveness of protein mass or gel hardness of the product. These include for instance pectin, oat meal, beta-glucan, agar, konjac gum, tragacanth, carrageenan, alginate (sodium or calcium alginate), xanthan gum, gellan gum, scleroglucan, locust bean gum, starch, and guaran. Of these alternatives, oat meal and kappa carrageenan are preferred.

### Other components influencing binding properties

It has furthermore be found that the addition of certain food ingredients such as phosphates, citrates and certain natural flavouring agents improve binding properties of the high gel strength protein and polysaccharides systems.

The presence of phosphates, citrates or other food grade chelating agents such as EDTA chelate some cations or minerals in the food matrix and are thought to hereby thereby reduce ionic interference to protein gelation, resulting protein gel that are more elastic. This effect improve mouthfeel and texture of the final product.

The presence of certain natural flavouring agents such as yeast extract and basic amino acids (arginine, lysine and histidine) also improve texture profile of the binding system. This is thought to be due to the basic amino acids creating a more uniform and porous gel matrix that can better entrap water or facilitate protein cross-linking.

Suitable enzymes include a protein crosslinking enzyme such as transglutaminase and/or a protein modifying enzyme such as glutamine-glutamic acid converting enzyme, such as glutaminase. Such enzymes can improve the binding ability, either by increasing the molecular weight of the protein, and/or by changing the ionic groups. In the latter case, the isoelectric point of enzymes are shifted to more acid region (e.g. from pH 6 to pH 5.5 or 5.0), which will modify protein properties. Thereby, the gel will be more elastic.

The present inventors found for example that adding mixtures of high gel strength protein and pregelatinized starch in a ratio of 0,5 - 8 : 1, more preferable 1 - 5 : 1 (preferably 2 wt% to 8 wt% of protein and 1 wt% to 3 wt% of pregelatinized starch) to a representative plant-based meat imitation caused an increase of viscosity, improvement of processability, and response to heating equivalent to the addition of 1 to 2 wt% of methylcellulose.

### Particles comprising a texturized plant protein material, water and a vegetable lipid

The texturized plant protein products may be aimed to be suitable as red meat analogue (including bovine, porcine, sheep; game like hare deer; tuna fish). Other texturized plant proteins may be more aimed at white meat, such as poultry, white fish, crab and the like.

The term "meat substitutes" or "meat surrogates" can be used interchangeably. They refer to products comprising protein of non-animal origin and produce a meat-like texture. Proteins can be derived from different sources, like legumes, cereals, nuts, mushrooms, algae, bacteria, but are not limited to those.

Texturized plant proteins are known in the industry. Reference can be made to McClements and Grossmann in Compr. Rev. Food Sci. Food Safety 2021 20:4049-4100 and Kyriakopoulou et al., in Functionality of Ingredients and Additives in Plant-based Meat Analogues, Foods 2021, 10, 600*.* Patent disclosures, suitable as general background include WO2014/193547, US202/060209, WO2005/004625, WO2003/061400, EP-A-2945490 and US2018/084815. It is noted that some of the older references use partly non-vegan materials. However, nowadays, the same technology is used to make fully vegan fibrous materials.

Preferably, the plant-based meat substitute comprises particles (i) comprising 10 wt% to 60 wt% of texturized plant protein material, 10% to 90% of water and 1% to 30% of a vegetable lipid, wherein the wt% are related to the plant-based meat substitute (amounts of (i) and (ii)). The texturized plant protein material may comprise non-protein compounds, including one or more of alginates, fibrous carbohydrates, triglycerides, water, salt, emulsifiers and the like.

### Processing

The process for making the plant based meat substitute according to present invention comprises the following steps: the components are mixed with water, allowed to hydrate, formed to a shape, heated to a temperature of about 70 °C or higher, and cooled.

Components may be individually hydrated, or combined in dry state before hydrating. Generally, the mixtures are mixed by agitation during hydration.

In a preferred embodiment, all components are mixed before adding water and allowing to hydrate, as this is the simplest way of preparing the mixtures.

### Hardness and gel strength

The term "hardness" as used herein refers to a texture parameter of a food and is calculated from the end point of the first compression of the food in a compression assay employing suitable measuring devices, as e.g. a Texture Analyzer (TA.XT. plus, Stable Micro Systems) or a similar. The test mode was according to normal instructions, in compression mode; test speed 0.5 mm/s; distance 10 mm and trigger force 5 g on a 10 ml sample. The end point is measured at 20 sec.

The detected force is believed to correlate with the force required to compress the food between molars during mastication. Variables used herein to adjust the hardness of a meat-substitute are focused on concentrations and ratios of binding materials employed.

### EXAMPLES

### Gel hardness values of high gel strength proteins

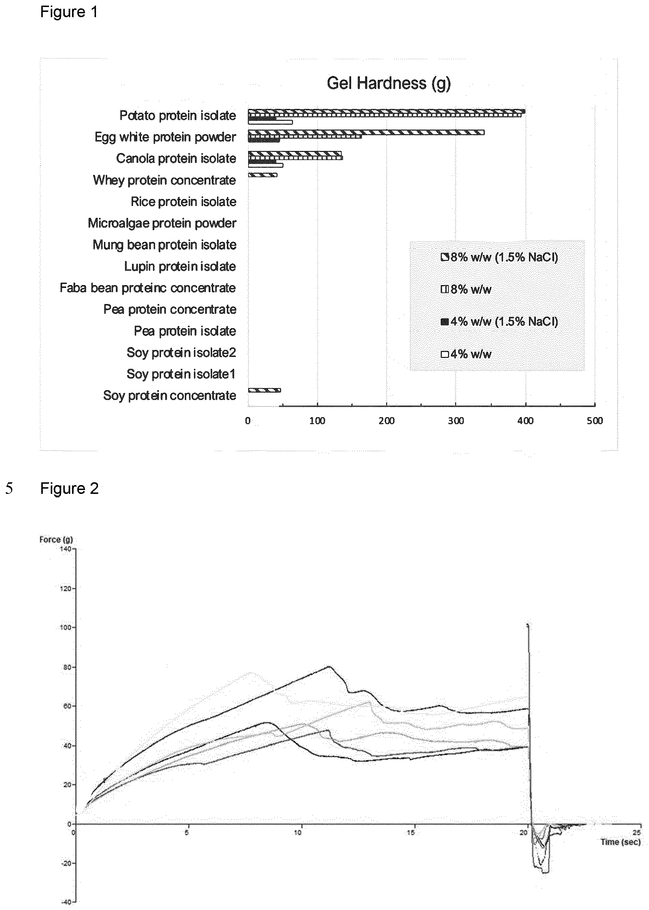

Gel hardness was tested for 14 protein materials with and without the presence of 1.5 wt% sodium chloride. Protein gels were prepared by heating protein suspensions at 90°C for 1 hour and stored at 4°C for 16 hours. The pH values of the protein suspensions are in the range of 6.5 to 7.5. Gel hardness was measured as force (g) at the end point of gel strength measurement, as described above. Total protein contents were 4 and 8 wt%. The results are provided in Fig. 1. Exemplary gel hardness tests are shown in Fig. 2.

In Fig. 2, the peak in the measurement indicates the rupture force [g], while the force at the end of the measurement represents the hardness [g].

### Examples 1-4, Comparative Experiments A, B

### Method of preparing vegan burger analogue and analysis thereof

Water was added to textured vegetable protein (TVP) from soy, pea or other sources in a mixture and stirred until properly hydrated. Coconut oil and other components (salt, coloring, flavoring agents) were added to the hydrated texture pea protein. Binding agent, e.g. methylcellulose (pre-dissolved in cold water or pre-emulsion with coconut oil and cold water) or egg white powder or a dry mix of a high gel strength protein and cold thickening agent, was added to the mixture. The mixture so obtained was slowly mixed to obtain a final mixture that is adhesive and homogenous. About 100 g of final mixture was molded by hand or in a mold to a round shape which assembles a burger patty shape.

The patty shaped mixture was cooked immediately by searing both sides in a pan or griller, or by heating at 160-180C in oven until both sides were fully cooked. Alternatively, the patty shaped mixture was stored at 4 °C overnight before cooking.

Basically, the patty shaped mixture is measured for hardness using Texture Analyzer at different phase. The mixtures were kept at 10 °C for 30 min, and their hardness was then measured with a texture analyzer (brand, model of texture analyzer; maybe also type of probe). The mixtures where then heated to 80 °C for 10 min, then to 90 °C for 5 min, then allowed to cool to room temperature (20 °C) in 60 min, then reheated to 50 °C for 10 min, to 60 °C for 5 min, and finally to 70 °C for 5 min. After each heating period the hardness was again measured. The results are given in the table below. All the measured hardness values are in N/m².

### Specific meat substitutes

A number of different meat substitutes were prepared by mixing the pea-protein-based meat imitation TVP, such as for example Rovitaris PX 365 available from BK Giulini GmbH, with water and liquid coconut fat, and adding to this mixture at room temperature either 1% or 2% of methylcellulose (pre-dissolved in cold water; 4000cps) or various amounts of potato protein (patatin) and pregelatinized pea starch, as specified in the table below. All numbers are weight-%.

| Ingredients [%] | Ex. 1 | Ex. 2 | Ex. 3 | Ex. 4 | C. Exp A | C. Exp B |
|---|---|---|---|---|---|---|
| TVP | 28.75 | 28.44 | 28.13 | 27.81 | 23.44 | 23.44 |
| Water | 61.25 | 59.56 | 58.87 | 57.19 | 51.56 | 51.56 |
| coconut fat (I) | 5 | 5 | 5 | 5 | 5 | 5 |
| pregel. pea starch | 1 | 1 | 1 | 1 | 0 | 0 |
| Potato protein | 4 | 6 | 7 | 9 | 0 | 0 |
| Methyl cellulose | 0 | 0 | 0 | 0 | 1 | 2 |
| Water/Ice | 0 | 0 | 0 | 0 | 19 | 18 |

The hardness results are summarized in the below table.

| Hardness (TxA.) | Ex. 1 | Ex. 2 | Ex. 3 | Ex. 4 | C. Exp. A | C. Exp B |
|---|---|---|---|---|---|---|
| 80°C | 1023 | 1223 | 1535 | 1327 | 894 | 1036 |
| St.Dev. [%] | 13 | 16 | 11 | 34 | 9 | 8 |
| 90°C | 667 | 855 | 1137 | 1171 | 730 | 871 |
| St.Dev. [%] | 5 | 6 | 8 | 5 | 5 | 18 |
| 10°C | 1576 | 1639 | 2531 | 2356 | 723 | 1027 |
| St.Dev. [%] | 16 | 9 | 12 | 8 | 6 | 10 |
| ReHe 70°C | 896 | 1162 | 1373 | 1047 | 785 | 1052 |
| St.Dev. [%] | 14 | 9 | 8 | 23 | 8 | 16 |
| ReHe 60°C | 923 | 729 | 1106 | 1687 | 755 | 883 |
| St.Dev. [%] | 10 | 24 | 35 | 15 | 17 | 13 |
| ReHe 50°C | 721 | 886 | 1237 | 1401 | 813 | 1089 |
| St.Dev. [%] | 28 | 15 | 22 | 26 | 15 | 14 |

These results show that for instance Example 2 (6% potato protein, 1% pregelatinized pea starch) closely resembles the control mixtures with methylcellulose (Comp Exp. A and B).

### Examples 5-6 and Experiments I-III

In some formulation, high salt (1-3% NaCl) is added to a meat analogue. These amounts of salt reduce the solubility of a number of plant proteins, and/or reduce the gel strength obtained by the protein. Yet, the compositions of the present invention still provide suitable strength.

This example furthermore shows that the addition of TSPP (tetrasodium pyrophosphate) 0.1% (or other polyphosphates or phosphate types) for recipes containing high salt concentration improves the gel strength. The addition of TSPP or other phosphates retains high hot binding ability of the binding agent (hot binding and cold binding agent).

In a first set of experiments, the gel strength of protein gels was determined.

| Ingredients [%] | Exp. I | Exp. II | Exp. III |
|---|---|---|---|
| Potato protein (Patatin) | 7 | 7 | 7 |
| Sodium chloride | 0.1 | | |
| TSPP | | | 0.1 |
| Water | 91.9 | 92 | 91.9 |

| | Firmness of gel | | |
|---|---|---|---|
| | 45.3 | 59.5 | 68.5 |
| St dev | 6% | 4% | 6% |

Patties were prepared as described above with the ingredients as given in the next table.

| Ingredients [%] | Ex. 5 | Ex. 6 |
|---|---|---|
| TVP | 26.8 | 26.8 |
| Water | 58.2 | 58.1 |
| coconut fat (I) | 5.0 | 5.0 |
| pregel. Pea starch | 1.0 | 1.0 |
| Canola protein (cruciferin) | 8 | 8 |
| Sodium chloride | 1.0 | 1.0 |
| TSPP | 0 | 0.1 |

| | Hardness | |
|---|---|---|
| | 2131 g | 2932 g |
| St dev | 15% | 19% |

The results showed that addition of TSPP increase hardness of burger in the presence of salt, but also without additional salt present.

### Examples 7-11

In a similar process as described for the former products, in addition to TSPP or phosphates, the presence of basic amino acid (Lysine, Arginine, Histidine), yeast extract, food grade surfactants (e.g. lecithin (from soy or sunflower), mono- or diglycerides etc.), or enzymes that modify protein structures e.g. transglutaminase (for cross-linking) or glutaminase (for converting glutamine to glutamic acid) can enhance or modify protein gel strength and elasticity. In particular, addition of these ingredients will improve or modify texture of binding agent and final product (as they modify intermolecular interaction of protein leading better or enhance hot-binding property of a high gel strength protein.

| Ingredients [%] | Ex. 7 | Ex. 8 | Ex. 9 | Ex. 10 | Ex. 11 |
|---|---|---|---|---|---|
| TVP | 28.5 | 28.3 | 28.5 | 28.5 | 28.5 |
| Water | 62.2 | 61.2 | 62.2 | 61.4 | 62.2 |
| coconut fat (I) | 5.0 | 5.0 | 5.0 | 5.0 | 5.0 |
| pregel. Pea starch | 1 | 1.5 | 1 | 2 | 1 |
| High gelling plant protein* | 3 | 3 | 3 | 3 | 3 |
| Basic amino acid (Lys) | 0.3 | | | | |
| Yeast extract | | 1.0 | | | |
| Surfactant (lecithin) | | | 0.3 | | |
| Enzyme (glutaminase) | | | | 0.1 | |
| Sodium Polyphosphate | | | | | 0.3 |

### Example 12

In this example, white texturized protein material (TVP) was used, like for example available from BK Giulini GmbH and its affiliates under the trade name Rovitaris^{®} Fibers or Rovitaris^{®} PF1000 series. However, other texturized protein material can be used as well. This protein material is texturized by alginate agglomeration, using calcium ions, and is generally denoted as wet fibre.

## Claims

1. A plant-based meat substitute comprising
(i) particles comprising a texturized plant protein material, water and a vegetable lipid and
(ii) a binding agent comprising, relative to the particles and binding agent,
- 0.5% to 20% of a high gel strength protein
- 0.3% to 20% of a cold-thickening polysaccharide
- 0% to 5% of additional ingredients chosen from chelating agent, emulsifier, natural flavour ingredients and enzymes crosslinking or ionically modifying the high gel strength protein.

2. The plant-based meat substitute according to claim 1, wherein the particles (i) comprise 10 wt% to 60 wt% of texturized plant protein material, 10% to 90% of water and 1% to 30% of a vegetable lipid, wherein the wt% are related to the plant-based meat substitute.

3. The plant-based meat substitute according to any one of claims 1-2, wherein the binding agent comprises 0.5 - 8% of a high gel strength protein and 0.5 - 4% of a cold-thickening polysaccharide.

4. The plant-based meat substitute according to any one of claims 1-3, wherein the high gel strength protein includes protein isolates or concentrates from potato, canola or other protein sources that possess gel hardness values > 30 g at 4 wt% in water and in 1.5 wt% NaCl in water.

5. The plant-based meat substitute according to any one of claims 1-4, wherein the high gel strength protein exhibits a solubility of about 40 % or more, preferably 50% or more, as 2 wt% protein mixture in water, and in 1.5 wt% NaCl solution, at a pH of about 7.

6. The plant-based meat substitute according to any one of claims 1-5, wherein cold thickening polysaccharide is pregelatinized starch, oat meal, pectin, vegetable fiber, beta glucan, carrageenan, or mixture of soluble and insoluble fiber or hydrocolloid that possess cold soluble, cold gelling ability, preferably pregelatinized starch.

7. The plant-based meat substitute according to any one of claims 1-6, wherein the chelating agent is chosen from one or more of phosphates or citrate.

8. The plant-based meat substitute according to any one of claims 1-6, wherein natural flavour ingredient is chosen from one or more of arginine, lysine, histidine, yeast extract.

9. The plant-based meat substitute according to any one of claims 1-6, wherein food grade emulsifiers is chosen from one or more of nonionic, cationic, anionic surfactants

10. The plant-based meat substitute according to any one of claims 1-6, wherein the enzyme is a protein crosslinking enzyme such as transglutaminase or a glutamine-glutamic acid converting enzyme such as glutaminase.

11. The plant-based meat substitute according to any one of claims 1-10, wherein the meat substitute is a substitute for mammal meat, such as from bovine, swine, sheep; poultry meat, such as from chicken, turkey, duck; aquatic animal meat, such as from fish, crustacean.

12. The plant-based meat substitute according to claim 11, wherein the meat substitute is a form comprising particles (i) mimicking ground meat and/or meat particles, and a binding agent (ii), preferably vegan burger patties, meatballs, crab cakes, fish fingers, or chicken nuggets.

13. The plant-based meat substitute according to any one of claims 1-12, wherein the meat substitute further comprises one or more of flavoring and coloring additives.

14. Process for making the plant based meat substitute according to any one of the preceding claims, wherein the components are mixed with water, allowed to hydrate, formed to a shape, heated to a temperature of about 70 °C or higher, and cooled.
